# EUROPEAN PATENT APPLICATION

(11) **EP 1 403 538 A1**
(43) Date of publication of application: **31.03.2004**
(21) Application number: 03255988.2
(22) Date of filing: 23.09.2003
(51) Int. Cl.: F16C 19/08, F16C 25/08

(54) **Double-row ball bearings and double-row ball bearing preload application method**

(30) Priority: 24.09.2002 JP 2002276685; 21.10.2002 JP 2002306417
(71) Applicant: Minebea Corp., Kitasaku-gun, 389-0293 Nagano (JP)
(72) Inventor: OBARA, Rikuro; c/o Minebea Corp., Kitasaku-gun, Nagano 389-0293 (JP)
(74) Representative: Wilson Gunn Gee

(57) **Abstract**

A double-row ball bearing with a preload application structure including an axle and a sleeve surrounding the axle. At least two rows of bearing balls are disposed between the axle and the sleeve. An inner bearing ring is slidably mounted on the axle such that at least one of the two rows of bearing balls is set between the inner bearing ring and the sleeve. The second row of bearing balls is then set directly between the axle and the sleeve. A resilient member is connected to an external side surface of the inner bearing ring, and a preload applying member is connected to the resilient member. The preload applying member applies a preload to the inner bearing ring by increasing pressure on the resilient member. When an appropriate preload is achieved, the preload applying member is fixed to the axle.

## Description

The present invention relates to double-row ball bearings and double-row ball bearing preloading methods for use in automobiles, construction equipment, medical care equipment, precise fabrication-testing equipment and OA equipment.

Typically, ball bearings are formed with a groove located directly on an axle. Bearing balls roll along the groove. This is called a direct ball bearing. In cases where this direct ball bearing is a single row ball bearing (only one row of bails is provided), the alignment between the ball races formed in the axle,ball races of the outer ring and the balls is comparatively simple. However, for double-row ball bearings (where two rows of balls are provided) the alignment of the balls and the facing races is more complicated.

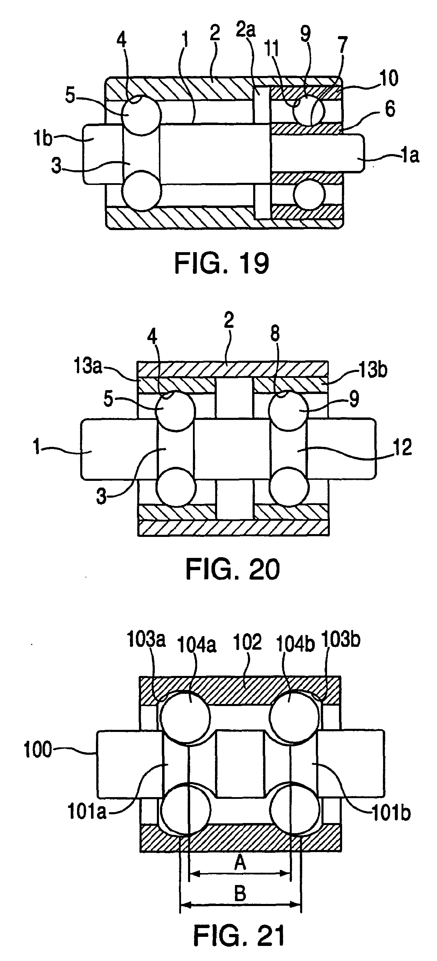

As shown in Figure 21, a double row direct ball bearing comprises axle 100 and two races 101a, 101b constructed along the circumference. Two races 103a, 103b are also constructed for the outer ring. In addition, balls 104a, 104b are sandwiched between their corresponding axle races and outer ring races.

For a double-row ball bearing constructed as described above, the relationship between the center line distance B between the left and right races on the outer ring and the center line distance A between the left and right races on the axle must be either B>A or A>B.

For this case, if B is much greater than A, or A is much greater than B, the preloading pressure between the race and the ball becomes great and the ball or the race changes shape, and defective ball bearings result.

Conventional double-row ball bearings have been constructed with, races 103a, 103b, corresponding to the axle's direct races 101a, 101b , at the inner surface of one of the outer rings. Thus, the outer ring races 103a, 103b must be accurately constructed to correspond to the axle's direct races 101a, 101b and even for the attachment of the outer ring to the axle. When applying an appropriate pre-load, a one micron accuracy is required. Once the ring is attached, there is no possibility of correction.

In general, in a first aspect, the invention features a double-row ball bearing with a preload application structure including an axle and a sleeve surrounding the axle. At least two rows of bearing balls are disposed between the axle and the sleeve. An inner bearing ring is slidably mounted on the axle such that at least one of the two rows of bearing balls is set between the inner bearing ring and the sleeve. The second row of bearing balls is then set directly between the axle and the sleeve. A resilient member is connected to an external side surface of the inner bearing ring, and a preload applying member is connected to the resilient member. The preload applying member applies a preload to the inner bearing ring by increasing pressure on the resilient member. When an appropriate preload is achieved, the preload applying member is fixed to the axle.

In general, in a second aspect, the invention features a double-row ball bearing with a preload application structure including an axle and a sleeve surrounding the axle. At least two rows of bearing balls are disposed between the axle and the sleeve. An outer bearing ring is slidably mounted inside the sleeve such that at least one of the two rows of bearing balls is set between the outer bearing ring and the sleeve. The second row of bearing balls is then set directly between the axle and the sleeve. A resilient member is connected to an external side surface of the outer bearing ring, and a preload applying member is connected to the resilient member. The preload applying member applies a preload to the outer bearing ring by increasing pressure on the resilient member. When an appropriate preload is achieved, the preload applying member is fixed to the sleeve.

In general, in a third aspect, the present invention features a method of preloading a double-row ball bearing including connecting a slidably mounted inner bearing ring of the double-row bearing to a preloading mechanism; applying pressure to the preloading mechanism; and fixing a component of the preloading mechanism to an axle of the double-row bearing when an appropriate preload is achieved.

In general, in a fourth aspect, the present invention features a method of preloading a double-row ball bearing including connecting a slidably mounted outer bearing ring of the double-row bearing to a preloading mechanism; applying pressure to the preloading mechanism; and fixing a component of the preloading mechanism to a sleeve of the double-row bearing when an appropriate preload is achieved.

The above aspects, advantages and features are of representative embodiments only. It should be understood that they are not to be considered limitations on the invention as defined by the claims. Additional features and advantages of the invention will become apparent in the following description, from the drawings, and from the claims.

The invention is illustrated by way of example and not limitation and the figures of the accompanying drawings in which like references denote like or corresponding parts, and in which:

Figure 1 is the longitudinal sectional view of the double row ball bearing according to the present invention;

Figure 2 is a longitudinal sectional view of a variation of the double row bearing in Figure 1;

Figure 3 is the longitudinal sectional view of the double row ball bearing of a second embodiment of the present invention;

Figure 4 is a partial longitudinal sectional view of a variation of the double row bearing in Figure 3;

Figure 5 is a longitudinal sectional view of the double row ball bearing according to another embodiment of the present invention;

Figure 6 is a partial longitudinal sectional view of a variation of the double row bearing in Figure 5;

Figure 7 is the longitudinal sectional view of the double row ball bearing of another embodiment of the present invention;

Figure 8 is a partial longitudinal sectional view of a variation of the double row bearing of Figure 7;

Figure 9 is the longitudinal section view of the double row ball bearing of yet another embodiment according to the present invention;

Figure 10 is the longitudinal section view of the double row ball bearing of another embodiment according to the present invention;

Figure 11 is the longitudinal section view of the double row ball bearing of a further embodiment according to the present invention;

Figure 12 is the longitudinal section view of the double row ball bearing of another embodiment according to the present invention;

Figure 13 shows one process that achieves a preload application method for the inner ring of the double row ball bearing of the present invention;

Figure 14 shows a further step of the process that achieves a preload application method for the inner ring of the double row ball bearing of the present invention;

Figure 15 shows a longitudinal sectional view of the double ball bearing which can be used with the preloading structure of the present invention;

Figure 16 shows a longitudinal sectional view of another double ball bearing which can be used with the preloading structure of the present invention;

Figure 17 shows a longitudinal sectional view of another double ball bearing which can be used with the preloading structure of the present invention;

Figure 18 shows a longitudinal sectional view of another double ball bearing which can be used with the preloading structure of the present invention;

Figure 19 shows a longitudinal sectional view of another double ball bearing which can be used with the preloading structure of the present invention;

Figure 20 shows a longitudinal sectional view of another double ball bearing which can be used with the preloading structure of the present invention; and

Figure 21 shows a longitudinal sectional view of the double ball bearing of prior art structure.

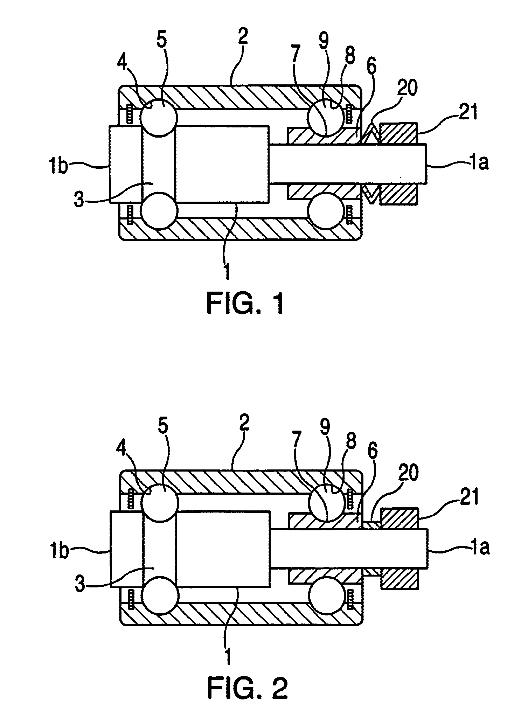

A first embodiment of a preload application construction is shown in Figure 1. Axle 1 preferably includes a small diameter portion 1a and a large diameter portion 1b with a step formed therebetween. Inner ring 6 is slidably mounted on the small diameter portion 1a of the stepped axle 1. Ring 21 and spring 20 are mounted on the small diameter portion 1a of the stepped axle 1 adjacently to the outer end surface of the inner ring 6. When pressure is applied to spring 20 by pushing ring 21 in the direction of the axis of stepped axle 1, an appropriate preload is applied to inner ring 6 in the same direction. Ring 21 can then be fixed on the small axis portion 1a of the stepped axle using an anchor, a fixing screw, caulking or adhesive agents. Spring 20 can be a temporary or undulating spring or, as shown in Figure 2, a coil spring. Even rubber or a resin can be used.

Since inner ring 6 is slidably mounted on the small diameter portion of axle 1, removing ring 21 from the small diameter portion 1a allows for analysis of inner ring 6. Therefore, it is possible to select other preloading means and/or adjust the preload amount. Another advantage of the present invention is that when heat expansion alters the preload supporting force, ring 21 can be removed from the small diameter portion 1a to change and readjust the preload. If the diameter of axle 1 expands due to the changing of the preload application component, it is still possible to accurately perform maintenance and preload application on the inner ring by changing the dimensions of the ring that applies the preload.

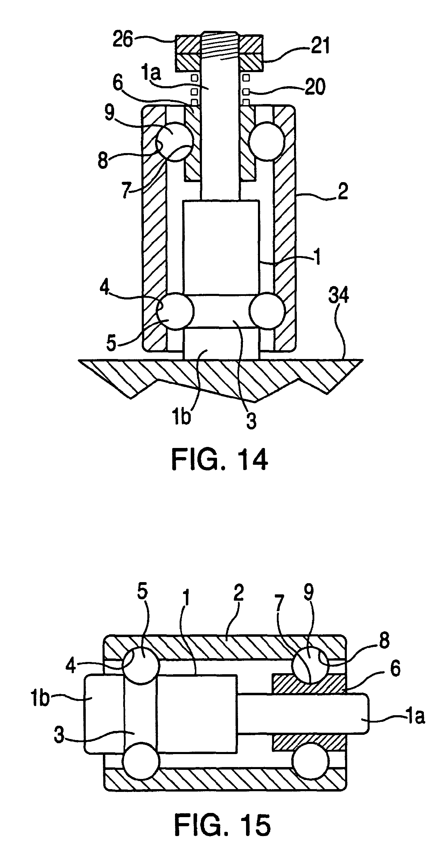

The preload structure described above can be applied to conventional double row ball bearings shown in Figures 15, 16 and 17, thus forming double-row bearings of preferred embodiments of the present invention. As shown in Figure 15, the bearing is provided with a stepped axle 1 having a small diameter portion 1a joined to a large diameter portion 1b and a straight sleeve 2 that extends the entire length of the bearing and has the same inner diameter along its length. A deep groove outer race 3 for the first row of bearing balls is formed on the outer surface of the large diameter portion 1b of the stepped axle 1. A plurality of balls 5 is set between this outer race 3 and a deep groove inner race 4 formed directly on the inner surface of sleeve 2. In addition, the second row's inner ring 6 is mounted on the small diameter axle portion 1a of the stepped axle 1. A plurality of balls 9 is set between the second row's deep groove inner race 8, formed directly on the inner surface of sleeve 2, and groove race 7, formed on the surface of inner ring 6.

In accordance with the present invention, for the manufacture of this ball bearing, an inner ring 6 is inserted such that it can slide in the axial direction along the small diameter portion 1a of the stepped axle 1 longitudinally along the entire body. The lower end (shown in Figure 15 as the left endpoint) of the stepped axle 1 is fixed using a cradle. A preload is exerted from the upper endpoint to the inner ring 6 using a thrusting body. When inner ring 6 is determined to be at an appropriate position, the inner ring is fixed to the small diameter's portion of the stepped axle using an adhesive agent.

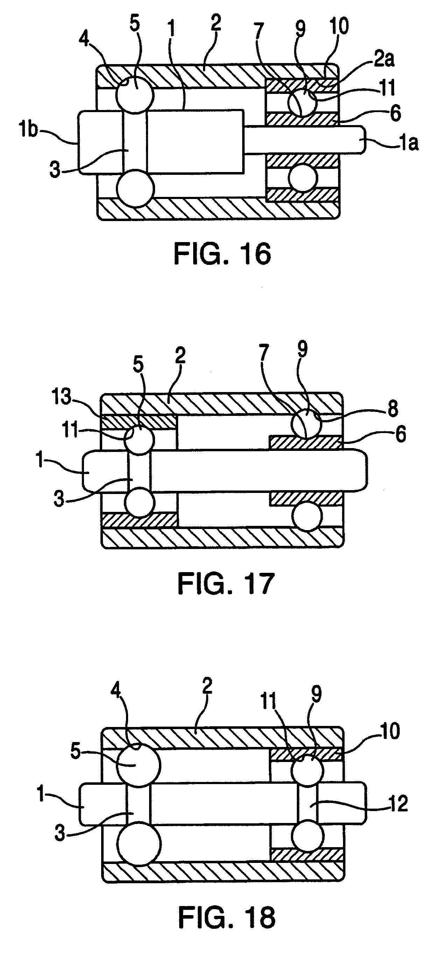

The double row ball bearing shown in Figure 16 includes a stepped axle 1 having a small diameter portion 1a joined to a large diameter portion 1b. A stepped sleeve 2 has an inner elongated portion 2a provided at one endpoint of the sleeve being parallel to the axis and having a larger inner diameter than the rest of sleeve 2. A deep groove outer race 3 for the first row of bearing balls is directly formed on the outer surface of the large diameter portion 1b of the Stepped axle 1, and a plurality of balls is set between this outer race 3 and a deep groove inner race 4 formed on the inner surface of sleeve 2. In order to accommodate the second row of bearing balls an inner ring 6 is mounted on the small diameter portion 1a of axle 1 and an outer ring 10 is inserted into sleeve 2. Inner ring 6 is formed with a deep groove race 7, outer ring 10 is formed with a deep groove 11, and a plurality of balls 9 is provided between the inner and outer ring's facing races 7 and 11.

In the manufacturing of the ball bearing shown in Figure 16, inner ring 6 is slidably mounted on the small diameter portion 1a. While the left endpoint of the stepped axle 1 is supported from below with a cradle, a preload is exerted towards inner ring 6 with a thrusting body. When an appropriate preload is achieved, inner ring 6 is fixed, preferably with adhesive, to the small diameter axle portion 1a.

Another double-row ball bearing which can be manufactured using the preload structure of the present invention is shown in Figure 17. The ball bearing shown in Figure 17 has an outer ring 13 inserted into sleeve 2 for accommodating the first row of bearing balls and an inner ring 6 for accommodating the second row of bearing balls. Bearing sleeve 2 is a straight sleeve that extends the entire length of the bearing with the same inner diameter. A straight axle 1 also extends the entire length of the bearing with the same outer diameter.

More specifically, the first row of bearing balls 5 is placed between a deep groove outer race 3 formed on the outer surface of axle 1 and a deep groove inner race 11 formed on the inner surface of the outer ring 13, which is fixed inside straight sleeve 2. The second row of bearing balls 9 is set between the deep groove outer race 7 of second row's inner ring 6 and the deep groove inner race 8, which is formed directly on the inner surface of sleeve 2.

In the manufacturing of the ball bearing shown in Figure 17, outer ring 13 is fixed by means of press fitting it into the interior of sleeve 2 and adhering, etc. While the left end of axle 1 is supported from below with a cradle, inner ring 6 is slidably mounted on axle 1, pressure is applied to inner ring 6 from above, and, when an appropriate preload is achieved, inner ring 6 is fixed to the axle using an adhesive.

Another double-row ball bearing which can be manufactured using the preload structure of the present invention is shown in Figure 18. The double row ball bearing shown in Figure 18 is provided with a straight sleeve 2 extending the entire length of the bearing with the same inner diameter, a straight axle 1 extending the entire length of the bearing with the same outer diameter and an outer ring 10 for accommodating the second row of bearing balls. Outer ring 10 is inserted into straight sleeve 2 and affixed thereto.

More specifically, the first row of bearing balls 5 is set between a deep groove outer race 3, formed directly on the outer surface of straight axle 1, and the first row's deep groove inner race 4, which is directly formed on the inner surface of straight sleeve 2. The second row of bearing balls 9 is set between the second row's deep groove outer race 12, formed directly on the outer surface of axle 1, and the second row's deep groove inner race 11, formed on the inner surface of outer ring 10.

In the manufacturing of the ball bearing shown in Figure 18, outer ring 10 is inserted into sleeve 2 such that it can slide longitudinally along the entire body. While the lower end (in Figure 18, the left endpoint) of sleeve 2 is supported with a cradle, a preload is exerted from the upper endpoint to outer ring 10 using a thrusting body. When an appropriate preload is achieved, outer ring 10 is fixed to sleeve 2 at an appropriate position using an adhesive.

Another double-row ball bearing which can be manufactured using the preload structure of the present invention is shown in Figure 19. The double row ball bearing shown in Figure 19 has an essentially equivalent structure to the double row ball bearing shown in Figure 16. However, the length of the inner elongated diameter portion 2a of sleeve 2 of Figure 19 is longer than the length of the stepped axle small diameter portion 1a.

To manufacture the ball bearing of Figure 19, the second row's deep groove ball bearing inner ring 6 is inserted and fixed to stepped axle's 1 small diameter portion 1a and outer ring 10 is slidably inserted into sleeve's 2 inner elongated diameter portion 2a. While the left end of sleeve 2 is supported from below by a cradle, a preload is applied by a thrusting body to outer ring 10. When an appropriate preload is achieved outer ring 10 is fixed to the sleeve's inner elongated diameter portion 2a using an adhesive.

Another double-row ball bearing which can be manufactured using the preload structure of the present invention is shown in Figure 20. The double ball bearing shown in Figure 20 includes a straight axle 1 having an equal outer diameter along the entire length of the bearing and a straight sleeve 2 having an equal inner diameter along the entire length of the bearing. Deep groove outer races 3 and 12 are formed on the outer surface of the straight axle 1 for accommodating the first and the second row of bearing balls, respectively. A first row's outer ring 13a and the second row's outer ring 13b are provided within straight sleeve 2. First and second row's outer rings 13a and 13b preferably have an equal thickness. The first row of bearing balls 5 is set between a deep groove inner race 4 of the outer ring 13a and outer race 3. Similarly, the second row of bearing balls 9 is set between a deep groove inner race 8 of the outer ring 13b and outer race 12.

In the manufacture of the ball bearing of Figure 20, outer ring 13a is inserted and fixed to sleeve 2. While the left end-face of the sleeve is supported with a cradle, outer ring 13b is fitted into sleeve 2 such that it can slide. A preload is applied to outer ring 13b using a thrusting body. When an appropriate preload is achieved, the outer ring 13b is fixed within sleeve 2 using an adhesive.

In the above described double row ball bearings, double row ball bearings shown in Figures 15 through 17 are the type where a preload is applied to inner ring 6, which is slidably mounted on axle 1, and inner ring 6 is then fixed to axle 1 with an adhesive. In contrast to this, double ball bearings shown in Figures 18 through 20 are the type where preload is applied to outer rings 10, 13b, which are slidably fitted into sleeve 2, and outer rings 10, 13b are then fixed inside sleeve 2 using an adhesive.

In these double row ball bearings, an appropriate preload can be achieved during their manufacture because their inner rings fitted to the axle or their outer rings fitted to the sleeve, depending upon the construction, are able to slide along the axle or the sleeve, respectively. Accordingly, the pressure applied by the race to the ball can be accurately set. Moreover, a resulting double row ball bearing has lower manufacturing costs because of ease of assembly.

In the described double row ball bearings, the race is shaped as a deep groove and has a flange (shoulder part of the groove) which is symmetrical on both sides of the groove, in comparison to an angular shape. Therefore, inner ring's outer diameter grinder can grind and control both sides of the flange under steady impeller conditions using left and right whetstones. In addition, race grinding and race ultra- finishing can increase high accuracy and can control both sides of the flange under steady impeller conditions using shoes.

During the manufacturing of the above embodiments of double-row bearings, the race process that forms two rows of races on the inner surface of that sleeve can be implemented while leaving the sleeve's end clamped and not changing the sleeve's mounted direction on the clamp device. Several effects such as maintaining the concentric accuracy for the two rows and thereby attaining high-accuracy races can be achieved.

However, because the double row ball bearing shown in Figures 15 through 20 are the type where preload is applied to either the inner ring or the outer ring and then fixed with adhesive to either the axle or the sleeve, there are shortcomings such as: once fixed using an adhesive agent, it is impossible to analyze the bonded inner or outer ring without damaging them. The customer cannot freely select a preload means nor adjust the preload amount and inspection and maintenance are difficult. In addition, depending on the product, there are applications where adhesive agents are not preferred and thus there are difficulties for these applications. Even when preload retention force changes from the fixed value due to heat expansion, it is not possible to change or adjust the subsequent preload. When the axle diameter and sleeve diameter increase, reliability problems arise when fixing is only accomplished through the adhesive agent. Also, an inferior vibration-resistance and inferior load-bearing properties are possible.

The first preload application construction described above can be used, for the construction shown in Figures 17 and 18. However, to suitably use the first preload application construction for the construction shown in Figure 18, for an axle with an attached inner ring 6, the axle should be constructed as a straight axle 1, with an equal diameter along its entire length.

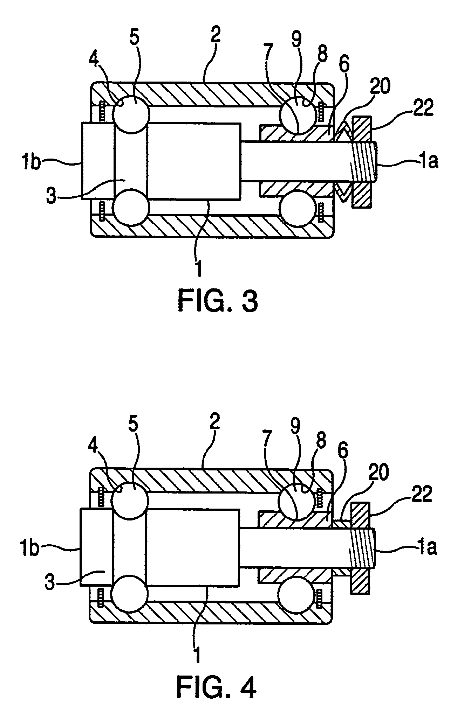

Figure 3 is a longitudinal sectional view and Figure 4 is s longitudinal sectional of one component of a modified embodiment of the preload application. This modified embodiment may be used with a conventional double-row bearing shown in Figure 16.

This second preload application is constructed in the following way. As shown in Figure 3, an inner ring 6 of the second row of bearing balls is slidably mounted on the small diameter portion 1a of the stepped axle 1. A nut 22 and spring 20 are mounted in order on the small diameter portion 1a of the stepped axle 1 adjacently to the exterior end surface of the second row's inner ring 6 Nut 22 is engaged with the threaded nut portion of small diameter portion 1a. When the pressure on the spring 20 is increased by spirally advancing nut 22, an appropriate preload is applied in the axial direction of the stepped axle 1 towards inner ring 6. Nut 22 can then be fixed on the small diameter portion 1a of the stepped axle 1 by means of caulking and/or an adhesive agent. Spring 20 may be an undulating spring or rigid spring, as shown in Figure 3, or a coil spring, as shown in Figure 4.

Because the double row ball bearings in the second embodiment is constructed as mentioned above, the same results achievable in embodiment 1 are achievable in embodiment 2.

The second preload application construction for the double row ball bearing may be utilized with ball bearings shown in Figures 17 and 18, and for a bearing constructed in this way, it is possible to achieve the same results as achieved in the first embodiment. Double-row bearings shown in Figures 17 and 18 are particularly suitable for use with the second preload application construction because the axle on which inner ring is mounted, is a straight axle, whose equal diameter extends the entire length of the bearing.

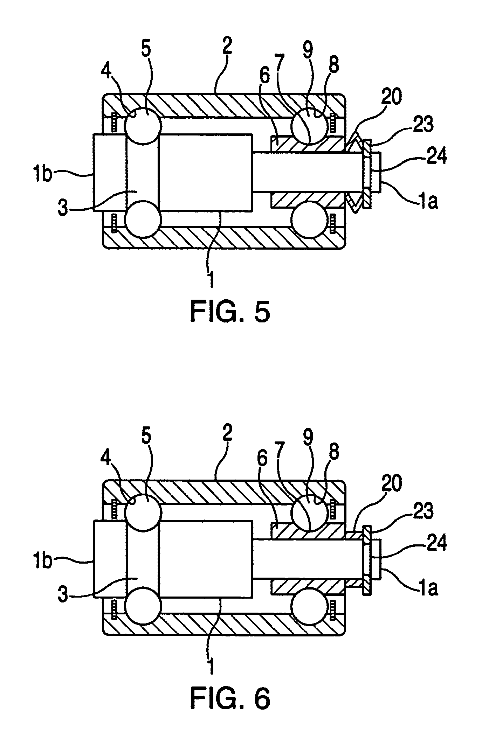

Figures 5 and 6 illustrate a third preload application construction, which is constructed in the following way. In accordance with Figure 5, an inner ring 6 of the second row of bearing balls is slidably mounted on the small diameter portion 1a of the stepped axle 1. A snap ring 23 and spring 20 are respectively mounted on the small diameter portion 1a of the stepped axle 1 adjacently to the exterior end surface of the second row's inner ring 6. When the pressure on the spring 20 is increased by pushing the snap ring 23 in the axial direction of the stepped axle 1, an appropriate preload is applied in the axial direction on the inner ring 6. The snap ring 23 is then mounted and fixed on the ring race 24 of the small diameter portion 1a of the stepped axle 1. Spring 20 may be an undulating spring or rigid spring, as shown in Figure 5, or a coil spring, as shown in Figure 6.

Because the double row ball bearings in the third embodiment are constructed as mentioned above, the same results that are achievable in embodiment 1 are achievable in embodiment 3.

The third preload application construction for the double row ball bearing may be utilized with ball bearings shown in Figures 17 and 18, and for a bearing constructed in this way, it is possible to achieve the same results as achieved in the first embodiment. Double-row bearings shown in Figures 17 and 18 are particularly suitable for use with the third preload application construction because the axle on which inner ring is mounted, is a straight axle, whose equal diameter extends the entire length of the bearing.

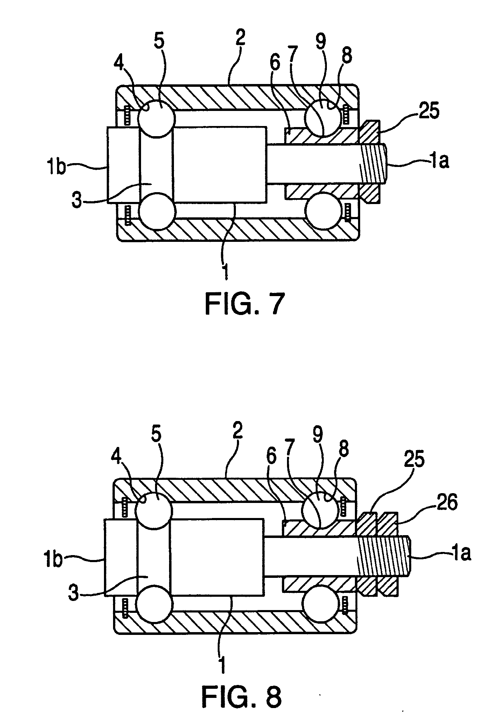

The fourth embodiment of the preload application is illustrated in Figures 7 and 8. The fourth preload application construction is constructed in the following way. In accordance with Figure 7, an inner ring 6 of the second row of bearing balls is slidably mounted on the small diameter portion 1a of the stepped axle 1. Nut 25 is also mounted on the small diameter portion 1a of the stepped axle 1 adjacently to the exterior end surface of the second row's inner ring 6, and is spirally attached to the threaded screw portion of small diameter portion 1a. An appropriate preload is applied in the axial direction of the stepped axle 1 towards inner ring 6 by spirally advancing the nut 25 in this axial direction. Nut 25 may then be fixed on the small diameter portion 1a of the stepped axle 1 by means of a fixed and stopped screw and double nut 26 (as more particularly shown in Figure 8), caulking, and an adhesive agent. In this case, the preload force applied to inner ring 6 is similar to that created by a torque wrench.

Because the double row ball bearings in the fourth embodiment is constructed as mentioned above, the same results achievable in embodiment 1 are achievable in embodiment 4.

The fourth preload application construction for the double row ball bearing may be utilized with ball bearings shown in Figures 17 and 18, and for a bearing constructed in this way, it is possible to achieve the same results as achieved in the first embodiment. Double-row bearings shown in Figures 17 and 18 are particularly suitable for use with the fourth preload application construction because the axle on which inner ring is mounted, is a straight axle, whose equal diameter extends the entire length of the bearing.

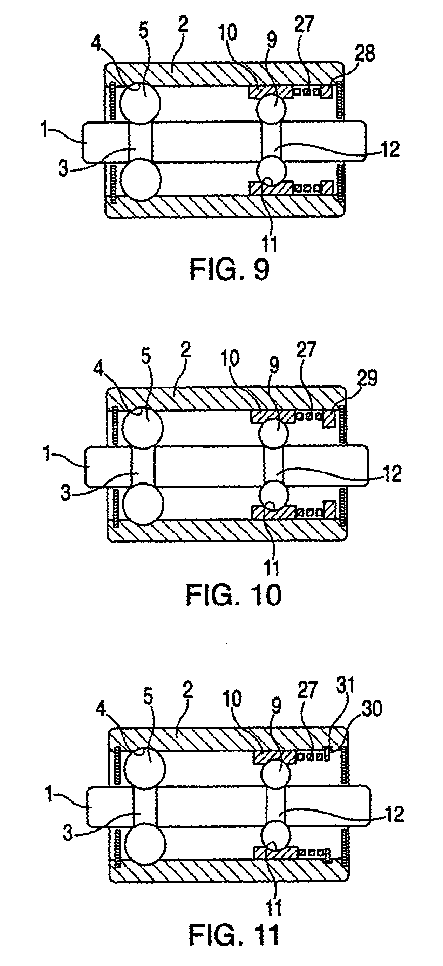

Next, we explain the fifth embodiment of the preload construction which is contained and is shown in Figure 9.

The fifth preload application construction is constructed in the following way. As shown in Figure 9, an outer ring 10 of the second row of bearing balls is slidably mounted on the interior of sleeve 2. Spring 27 and ring 28 are respectively mounted on the interior of sleeve 2, adjacently to the exterior end surface of the second row's outer ring 10. While increasing the pressure on the spring 27 by pushing the ring 28 in the axial direction of sleeve 2, an appropriate preload is applied in the axial direction of the outer ring 10. Ring 28 may then be fixed on the interior of sleeve 2 through means of fixed screws, caulking, and/or adhesive agents. Spring 27 may be a coil spring, as shown in Figure 9, an undulating spring or rigid spring.

To prevent grease leakage from the double-row bearing constructed in accordance with the fifth embodiment, shield planks 35 may be installed on both peripheral ends of the bearing sleeve. Shield plank 35, located on the side of the preload application, may be installed at the interior of the external terminal surface of outer ring 10, instead of being installed on the peripheral surface on the interior of the sleeve's end portion. If done in this way, ring 28 may be removed from sleeve 2, and it is convenient to analyze the preload application construction. This way of using the shield 35 is the same way as indicated in Figures 10-12.

In the double row ball bearing of embodiment 5, even after the maker attaches and loads the bearing and applies preload to the outer ring 10, it is still possible to analyze the position of the slidable outer ring 10 by removing ring 28 from the sleeve. The customer can then freely select other preloading means and readjust the preload amount, if necessary. The customer can inspect and maintain the bearing in accordance with his/her requirements. Even when the preload supporting force changes value, for example from heat expansion, it is possible to change and adjust the preload amount by removing ring 28 from the sleeve 2 and reapplying the preload. If sleeve's diameter becomes large, it is still possible to accurately perform maintenance and preload application for the outer ring 10 by only changing the dimensions of the preload application component. Finally, it is possible to achieve superior vibration proof motion and load resistant characteristics.

The fifth preload application construction for the double row ball bearing may be utilized with ball bearings shown in Figures 20 and 21, and for a bearing constructed in this way, it is possible to achieve the same results as achieved in the first embodiment. Double-row bearings shown in Figures 20 and 21 are particularly suitable for use with the fifth preload application construction because sleeve 2 has a stepped construction and includes the inner elongated portion 2a having an inner diameter larger than that of the rest of sleeve 2.

The sixth embodiment of the preload application construction, in accordance with the invention, is contained and is shown in Figure 10.

This sixth preload application construction is constructed in the following way In accordance with Figure 10, an outer ring 10 of the second row of bearing balls is slidably mounted on the interior of sleeve 2. Spring 27 and a screw-attached ring 29 are respectively mounted on the interior of sleeve 2, adjacently to the exterior end surface of the second row's outer ring 10. The screw-attached ring is spirally joined to the threaded screw portion of the sleeve's interior. While increasing the pressure on spring 27 by spirally advancing the screw-attached ring 29, an appropriate preload is applied in the axial direction of the sleeve 2 towards outer ring 10. Screw-attached ring 29 may then be fixed on the interior of sleeve 2 through means of fixed screws (fixed the same way as with double nuts), caulking and/or adhesive agents, Spring 27 may be a coil spring, in the way shown in Figure 10, an undulating spring or rigid spring.

The sixth preload application construction for the double row ball bearing may be utilized with ball bearings shown in Figures 20 and 21, and for a bearing constructed in this way, it is possible to achieve the same results as achieved in the fifth embodiment. Double-row bearings shown in Figures 20 and 21 are particularly suitable for use with the sixth preload application construction because sleeve 2 has a stepped construction and includes the inner elongated portion 2a having an inner diameter larger than that of the rest of sleeve 2.

The seventh embodiment of the preload application construction, in accordance with the invention is contained and is shown in Figure 11.

The seventh preload application construction is constructed in the following way. As shown in Figure 11, an outer ring 10 of the second row of bearing balls is slidably mounted on the interior of sleeve 2.Spring 27 and snap ring 30 are respectively mounted on the interior of sleeve 2, adjacently to the exterior end surface of the second row's outer ring 10. While increasing the pressure on the spring 27, an appropriate preload is applied in the axial direction towards outer ring 10. Snap ring 30 may then be fixed and mounted on ring race 31 of the sleeve's interior. Spring 27 may be a coil spring, in the way shown in Figure 10, an undulating spring or rigid spring.

The seventh preload application construction for the double row ball bearing may be utilized with ball bearings shown in Figures 20 and 21, and for a bearing constructed in this way, it is possible to achieve the same results as achieved in the fifth embodiment. Double-row bearings shown in Figures 20 and 21 are particularly suitable for use with the seventh preload application construction because sleeve 2 has a stepped construction and includes the inner elongated portion 2a having an inner diameter larger than that of the rest of sleeve 2.

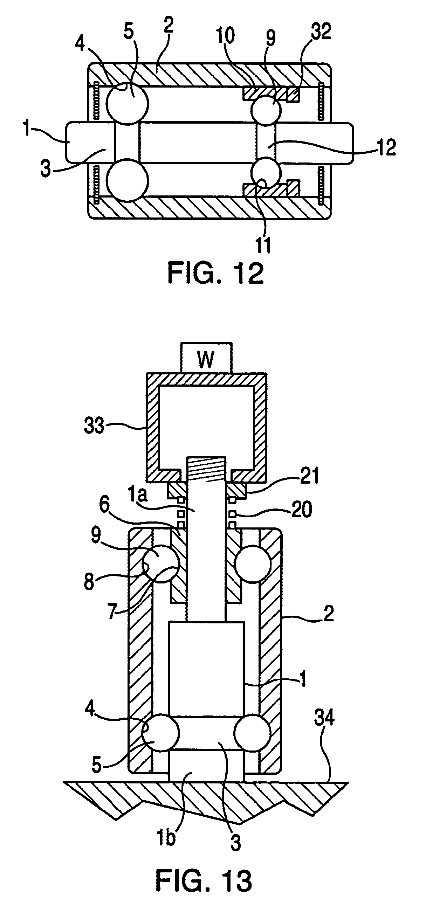

The eighth preload application is constructed in the following way. In accordance with Figure 12, outer ring 10 of the second row of bearing balls is slidably mounted on the interior of the sleeve 2. A screw-attached ring 32 is mounted on the interior of sleeve 2, adjacently to the exterior end surface of the second row's outer ring 10. The screw-attached ring is spirally joined to the threaded screw portion of the sleeve's interior. While spirally advancing the screw-attached ring 32, an appropriate preload is applied in the axial direction of sleeve 2 towards the outer ring 10. Screw-attached ring 32 may then be fixed to the interior of sleeve 2 by means of a fixed and stopped screw and double nut, caulking, and/or an adhesive agent. In this embodiment, the preload force applied to outer ring 10 is similar to that of a torque wrench.

The eighth preload application construction for the double row ball bearing may be utilized with ball bearings shown in Figures 20 and 21, and for a bearing constructed in this way, it is possible to achieve the same results as achieved in the fifth embodiment. Double-row bearings shown in Figures 20 and 21 are particularly suitable for use with the eighth preload application construction because sleeve 2 has a stepped construction and includes the inner elongated portion 2a having an inner diameter larger than that of the rest of sleeve 2.

The preload application method in embodiment 9 is related to the method of embodiment 1 where a weight is applied to the inner ring when preloading. As shown in Figures 1 and 2, the method of the ninth embodiment includes applying a preload using a weight directed to the inner ring of the ball bearing that has the form of an inner ring slide (see also, Figures 16-18).

Below is an explanation for applying the preloading method of using a weight on an inner ring slide, shown in Figure 16, for the first preload application method, shown in Figure 2 with an abbreviated explanation for other inner ring slides for the same first preload application methods shown in Figures 1 and 2.

Figure 13 shows one stage of applying a fixed preload using a weight W towards the bearings inner ring 6 which has an inner ring slide form.

As shown in Figure 13, a designated preload is applied by the use of a weight W directed towards the inner ring 6. The preload is applied perpendicularly to the ball bearing, such that axle 1 is supported on a fixed platform 34. Weight W then loads on the ring 21 using framework 33 and increases the designated pressure on the spring. Ring 21 is then temporarily fixed on the small diameter portion 1a of the axle 1 using a pin and an adhesive agent.

Next, as indicated in Figure 14, the weight W is released from ring 21, and a fixed nut 26 is mounted on the exterior end of the small diameter portion 1a. Fixed nut 26 is spirally joined to the threaded screw portion of the small diameter portion 1a thus fixing ring 21 in a temporarily fixed location on the small diameter portion 1a.

The preloading application method found in embodiment 9, being constructed as mentioned above, uses a simple method of loading a weight W on ring 21, making possible a method that easily and accurately applies a preload in the axial direction of axle 1 towards the inner ring 6.

The preload application method in embodiment 10 is related to the method of embodiment 5 where the weight is applied to the outer ring. Namely, there is a relationship between loading that occurs on the outer ring slide found in embodiment 5 and shown in Figure 9 and the method (referenced by Figures 19-21) which uses a designated preload with a weight on the outer ring of the bearing.

Weight W is applied towards the outer ring 10 which has the form of an outer ring slide, according to the abbreviation of a detailed diagram. It is possible to use a preload method that has the same principle as the preload application that is directed towards the inner ring 6 of the bearing, as in the above described embodiment 9.

Similarly to the above described embodiment 9, the preload is perpendicularly applied to the double row ball bearing, while supporting sleeve 2 on a fixed platform. The weight W is loaded onto the ring 28, thus increasing the designated pressure on spring 27. Ring 28 is then temporarily fixed on sleeve 2 using a pin and an adhesive agent. Next, the weight W is released from the ring 28, and ring 28 is fixed at the temporary fixed position on top of sleeve 2, using screw-attached rings (the screw-attached rings 29 of Figure 10 are identically constructed and are used solely for fixing).

The method of preloading in embodiment 10, as mentioned above, utilizes a simple method which loads the weight W on the ring 28 and is able to easily apply an accurate preload in the axial direction of sleeve 2 towards outer ring 10 and/or 13b.

For the convenience of the reader, the above description has focused on a representative sample of all possible embodiments, a sample that teaches the principles of the invention and conveys the best mode contemplated for carrying it out. The description has not attempted to exhaustively enumerate all possible variations. Other undescribed variations or modifications may be possible. For example, where multiple alternative embodiments are described, in many cases it will be possible to combine elements of different embodiments, or to combine elements of the embodiments described here with other modifications or variations that are not expressly described. Many of those undescribed variations, modifications and variations are within the literal scope of the following claims, and others are equivalent.

## Claims

1. A double-row ball bearing with a preload application structure comprising:
an axle;
a sleeve surrounding said axle;
at least two rows of bearing balls disposed between said axle and said sleeve;
an inner bearing ring slidably mounted on said axle such that at least one of said rows of bearing balls is set between said inner bearing ring and said sleeve;
a resilient member connected to an external side surface of said inner bearing ring; and
a preload applying member connected to said resilient member;
wherein said preload applying member applies a preload to said inner bearing ring by applying pressure on said resilient member, and wherein, when an appropriate preload is applied to said inner ring, said preload applying member is fixed to said axle.

2. The double-row ball bearing according to Claim 1 wherein said axle further comprises a small diameter axle portion and a large diameter axle portion, and wherein said inner bearing ring, said resilient member and said preload applying member are disposed on said small diameter axle portion.

3. The double-row ball bearing according to Claim 2, wherein said axle further comprises a ball race formed directly on an outer surface of said large diameter axle part, wherein said sleeve further comprises a first ball race formed directly on an inner surface of said sleeve, and wherein a first row of bearing balls is set between said ball race of said axle and said first ball race of said sleeve.

4. The double-row ball bearing according to Claim 2, wherein said inner bearing ring further comprises a ball race formed on its outer surface, wherein said sleeve further comprises a second ball race formed directly on an inner surface of said sleeve, and wherein a second row of bearing balls is set between said ball race of said inner bearing ring and said second ball race of said sleeve.

5. The double-row ball bearing according to Claim 2, wherein said sleeve further comprises a larger inner diameter portion and a smaller inner diameter portion; wherein said double-row ball bearing further comprises an outer bearing ring, said outer bearing ring being mounted inside said larger inner diameter portion of said sleeve in an opposing relationship with said inner bearing ring; wherein a first row of said bearing balls is set between a ball race of said large diameter portion of said axle and a ball race of said smaller inner diameter portion of said sleeve; and wherein a second row of bearing balls is set between a ball race of said inner bearing ring and a ball race of said outer bearing ring.

6. The double-row ball bearing according to Claim 1 further comprising an outer bearing ring, wherein said axle further comprises a ball race formed directly on its outer surface, wherein said outer bearing ring further comprises a ball race formed on its inner surface and wherein a first row of bearing balls is set between said ball race of said axle and said ball race of said outer bearing ring.

7. The double-row ball bearing according to Claim 6, wherein said inner bearing ring further comprises a ball race formed on its outer surface, wherein said sleeve further comprises a ball race formed directly on an inner surface of said sleeve, and wherein a second row of bearing balls is set between said ball race of said inner bearing ring and said ball race of said sleeve.

8. A double-row ball bearing with a preload application structure comprising:
an axle;
a sleeve surrounding said axle;
at least two rows of bearing balls disposed between said axle and said sleeve;
an outer bearing ring slidably mounted inside said sleeve such that at least one of said rows of bearing balls is set between said outer bearing ring and said axle;
a resilient member connected to an external side surface of said outer bearing ring; and
a preload applying member connected to said resilient member;
wherein said preload applying member applies a preload to said outer bearing ring by applying pressure on said resilient member, and wherein, when an appropriate preload is applied to said outer bearing ring, said preload applying member is fixed to said sleeve.

9. The double-row ball bearing according to Claim 8, wherein said sleeve further comprises a smaller inner diameter portion and a larger inner diameter portion, and wherein said outer bearing ring, said resilient member and said preload applying member are disposed inside said larger inner diameter portion of said sleeve.

10. The double-row ball bearing according to Claim 8, wherein said sleeve further comprises a ball race formed directly on an inner surface of said sleeve, wherein said axle further comprises a first ball race formed directly on an outer surface of said axle, and wherein a first row of bearing balls is set between said first ball race of said axle and said ball race of said sleeve.

11. The double-row ball bearing according to Claim 8, wherein said outer bearing ring further comprises a ball race formed on its inner surface, wherein said axle further comprises a second ball race formed directly on an outer surface of said axle, and wherein a second row of bearing balls is set between said ball race of said outer bearing ring and said second ball race of said axle.

12. The double-row ball bearing according to Claim 11 further comprising a second outer bearing ring, said second outer bearing ring having a ball race formed on its inner surface; wherein said axle further comprises a first ball race formed directly on its outer surface; and wherein a first row of said bearing balls is set between said ball race of said second outer bearing ring and said first ball race of said axle.

13. The double-row ball bearing according to Claim 8 further comprising an inner ring mounted on said axle, said inner ring having a ball race formed on its outer surface; wherein said outer bearing ring further comprises a ball race formed on its inner surface; wherein said axle further comprises a ball race formed directly on its outer surface; wherein said sleeve further comprises a ball race formed on its inner surface; and wherein a first row of bearing balls is set between said ball races of said outer bearing ring and said axle and a second row of bearing balls is set between said ball races of said inner bearing ring and said sleeve.

14. The double-row ball bearing according to Claim 9, wherein said axle further comprises a larger diameter portion and a smaller diameter portion; wherein said double-row ball bearing further comprises an inner bearing ring, said inner bearing ring being mounted on said smaller diameter portion of said axle in an opposing relationship with said outer bearing ring; wherein a first row of said bearing balls is set between a ball race of said larger diameter portion of said axle and a ball race of said smaller inner diameter portion of said sleeve; and wherein a second row of bearing balls is set between a ball race of said inner bearing ring and a ball race of said outer bearing ring.

15. The double-row ball bearing according to any preceding claim, wherein said resilient member is a coil spring.

16. The double-row ball bearing according to any preceding claim, wherein said resilient member is an undulating spring.

17. The double-row ball bearing according to any preceding claim, wherein said resilient member is a rigid spring.

18. The double-row ball bearing according to any preceding claim, wherein said resilient member is made of an elastic material.

19. The double-row ball bearing according to any preceding claim, wherein said preload applying member is a ring configured to apply pressure on said resilient member.

20. The double-row ball bearing according to any preceding claim, wherein said preload applying member is a nut configured to apply pressure on said resilient member.

21. The double-row ball bearing according to any preceding claim, wherein said preload applying member is a snap ring configured to apply pressure on said resilient member.

22. A double-row ball bearing with a preload application structure comprising:
an axle;
a sleeve surrounding said axle;
at least two rows of bearing balls disposed between said axle and said sleeve;
an inner bearing ring slidably mounted on said axle such that at least one of said rows of bearing balls is set between said inner bearing ring and said sleeve; and
a preload applying member connected to an external side surface of said inner bearing ring;
wherein said preload applying member applies a preload by applying pressure to said inner bearing ring, and wherein, when an appropriate preload is applied to said inner bearing ring, said preload applying member is fixed to said axle.

23. A double-row ball bearing with a preload application structure comprising:
an axle;
a sleeve surrounding said axle;
at least two rows of bearing balls disposed between said axle and said sleeve;
an outer bearing ring slidably mounted inside said sleeve such that at least one of said rows of bearing balls is set between said outer bearing ring and said axle; and
a preload applying member connected to an external side surface of said outer bearing ring;
wherein said preload applying member applies a preload by applying pressure to said outer bearing ring, and wherein, when an appropriate preload is applied to said outer bearing ring, said preload applying member is fixed to said sleeve.

24. The double-row ball bearing according to either of Claims 22 or 23, wherein said preload applying member is a nut configured to apply pressure to said outer bearing ring.

25. A method of preloading a double-row ball bearing comprising the steps of:
connecting a slidably mounted inner bearing ring of said double-row bearing to a preloading mechanism;
applying pressure to said preloading mechanism;
fixing a component of said preloading mechanism to an axle of said double-row bearing when an appropriate preload is achieved.

26. A method of preloading a double-row ball bearing comprising the steps of:
connecting a slidably mounted outer bearing ring of said double-row bearing to a preloading mechanism;
applying pressure to said preloading mechanism;
fixing a component of said preloading mechanism to a sleeve of said double-row bearing when an appropriate preload is achieved.
